Europäisches Patentamt

European Patent Office

Office européen des brevets

(19)

(11) Publication number: **0 162 412**
A2

# EUROPEAN PATENT APPLICATION

(12)

(21) Application number: **85105962.6**

(22) Date of filing: **15.05.85**

(51) Int. Cl.⁴: **B 29 C 45/27**

(30) Priority: **16.05.84 IT 2182184 U**

(43) Date of publication of application:
**27.11.85 Bulletin 85/48**

(84) Designated Contracting States:
**AT BE CH DE GB LI LU NL SE**

(71) Applicant: **CONTHERM S.r.l.**
**Strada Anulare 3**
**I-20090 Segrate Milano San Felice (Province of**
**Milano)(IT)**

(72) Inventor: **Monti, Flavio**
**Via Milano 4**
**I-20020 Lazzate(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) Injection block structure for feeding molten thermoplastic material into molds.

(57) The injection block structure for feeding molten thermoplastic material into molds, comprises modular elements (1,2,2a,3,3a,4,5) in mutually interchangeable association channels (6), extend through the interiors of the modular elements (1,2,2a,3,3a,4,5) and are adapted for directing the molten thermoplastic material to the molds. In combination with the modular elements (1,2,2a,3,3a,4,5), means of heating (7,8) the thermoplastic material are provided, which are housed within the channels (6).

EP 0 162 412 A2

./...

Croydon Printing Company Ltd

Fig. 1

This invention relates to an injection block structure for feeding molten thermoplastic material into molds.

Known are injection block structures which generally comprise one or more differently configured elements defining on their interiors one or more channels effective to communicate the outlet of an injection machine with the inlet(s) of one or more molds.

Since the arrangement and number of the molds may vary with the piece to be molded, a new structure must be fabricated each time that the design of the piece changes.

The molten thermoplastic material from the injection machine, in flowing through the injection block, undergoes some cooling, and large passages must be provided at the mold inlet to ensure an adequate flow into the mold, or a system must be included to keep the thermoplastic material at the temperature at which it leaves the machine.

According to the system adopted to heat the thermoplastic material, there are two general types of injection blocks.

In the first, or so-called hot plate type, the temperature is kept at a required level by supplying heat to the entire injection block.

In the second, or so-called cold system type, the temperature is kept at a required level by fitting heaters inside the channels wherethrough the molten thermoplastic material is made to flow.

However, such injection block types are not devoid of drawbacks.

With the non-heated block, in fact, the presence of large passages at the mold inlet results in the appearance of big risers on the piece produced which require additional machining to yield a finished piece.

With the hot plate block, the problem is encountered that the entire injection block must be kept at a high temperature, which results in considerable amounts of heat being dissipated to the environment and consequent high power requirements.

The cold system block overcomes the above problems, but in general, and like the former types, it requires that an injection block be fabricated each time that the piece design is changed.

With all of the above types, in fact, the block is to be specially fabricated for each individual arrangement of the molds.

It is a primary aim of this invention to provide an injection block which can be fabricated readily and quickly to suit the molds.

Within the above aim, it is an object of the invention to shorten the injection block fabrication times, while retaining the advantages afforded by the cold system blocks.

The above aim, as well as this and other objects, is achieved by an injection block structure for feeding molten thermoplastic material into molds, characterized in that it comprises modular elements wherethrough internal channels are formed to feed in the molten thermoplastic material, and in combination with said modular elements, means of heating said material which are housed inside said channels.

Further features and advantages will become apparent from the detailed description of a structure according to the invention, with reference to the accompanying illustrative drawings, where:

Figure 1 is a partly exploded perspective view of one embodiment of the structure according to the invention;

Figure 2 is a sectional view of a portion of the inventive structure housed in the mold;

Figure 3 is a sectional view taken along the line III-III of Figure 2;

Figure 4 is a partly sectional top plan view of the structure according to the invention, in its embodiment shown in Figure 1;

Figure 5 is a top plan view of another embodiment of the structure according to the invention;

Figure 6 is a perspective view of the center block of the inventive structure shown in Figure 4;

Figure 7 is a sectional view taken along the line VII-VII of Figure 6;

Figure 8 is a perspective view of the center block of the structure shown in Figure 5;

Figure 9 is a sectional view taken along the line IX-IX of Figure 8;

Figures 10,11, and 12 are perspective views of elements of the structure according to the invention;

Figure 13 is a sectional view taken along the line XIII-XIII of Figure 10;

Figure 14 is a sectional view taken along the line XIV-XIV of Figure 11; and

Figure 15 is a sectional view taken along the line XV-XV of Figure 12.

With particular reference to the drawing views, the injection block structure according to this invention comprises modular elements which may be variously interconnected to provide the most suitable configuration for the mold type to be fed. These modular elements include spacer elements 1 of a substantially tubular shape, which serve the function of interconnecting at least some of the other modular elements. Among the latter, is a center block 2 and injection blocks 3 may be observed with which injection dies 4 and connection blocks 5 are associated.

As shown in the figures, these modular elements are formed with internal channels 6 through which the molten thermoplastic material, indicated in the figures by dotted areas, is allowed to flow, it being heated by flow streamliners 7 and injection streamliners 8 accommodated, according to the invention, within said channels 6.

On reviewing said modular elements in further detail, one notices the center block 2 of parallelepipedal shape the top whereof is penetrated by a hole 9 which is associated with the injection machine and forms the inlet or feed port to the channels 6 inside the modular elements. The center block 2 may have several holes, depending on the shape to be imparted to the structure of the injection block. In Figures 6 and 7, a center element 2 is shown which has in two opposed side surfaces thereof the holes 10 and 11 for connection to the spacer elements 1. In Figures 8 and 9, a center block 2 is shown which also has the other two side faces penetrated by holes 12 and 13. Of course, there might be provided one, or three, or more than four holes, according to the requirements of the structure to be realized.

The injection blocks 3, one of which is shown particularly in Figures 11 and 14, have at least one hole 14 connected to one of said spacer elements 1 and a hole 15 connected to the injection die 4. The remote face from that having the hole 14 has a hole 16 which is coaxial with the hole 14, whereinto a flow streamliner 7 is fitted. The remote face from the face with the hole 15 has a hole 17, which is coaxial with the hole 15 whereinto an injection streamliner 8 is fitted. Where the mold arrangement requires two injections with the distance between centers so close that two injection blocks 3 like the one shown in particular in Figures 11 and 14 cannot be used, it will be necessary to provide an injection block 3a like the one shown in particular in Figures 12 and 15.

As may be seen indeed from Figures 12 and 15, the injection block 3 has on the top face two holes 22 and 23 whereinto the injection streamliners 8 are fitted. Coaxial with these two holes 22 and 23, but on the opposite face, are two more holes 24 and 25 which are connected to the injection dies 4. The injection block 3a, similarly to the one shown in Figures 11 and 14, has at least one hole 26 for connection to one of the spacer elements 1 and a hole 27 coaxial with the hole 26 for the insertion of a flow streamliner 7.

The connection blocks 5, one of which is shown in particular in Figures 10 and 13, may have, depending on the shape sought for the structure, two or more holes for connection to the spacer elements 1. In the block shown in Figure 10, there are three holes for connection to the spacer elements, as respectively indicated at 18,19 and 20. The opposite face to the hole 20 has a hole 21 coaxial with the hole 20 wherein a flow streamliner 7 is inserted.

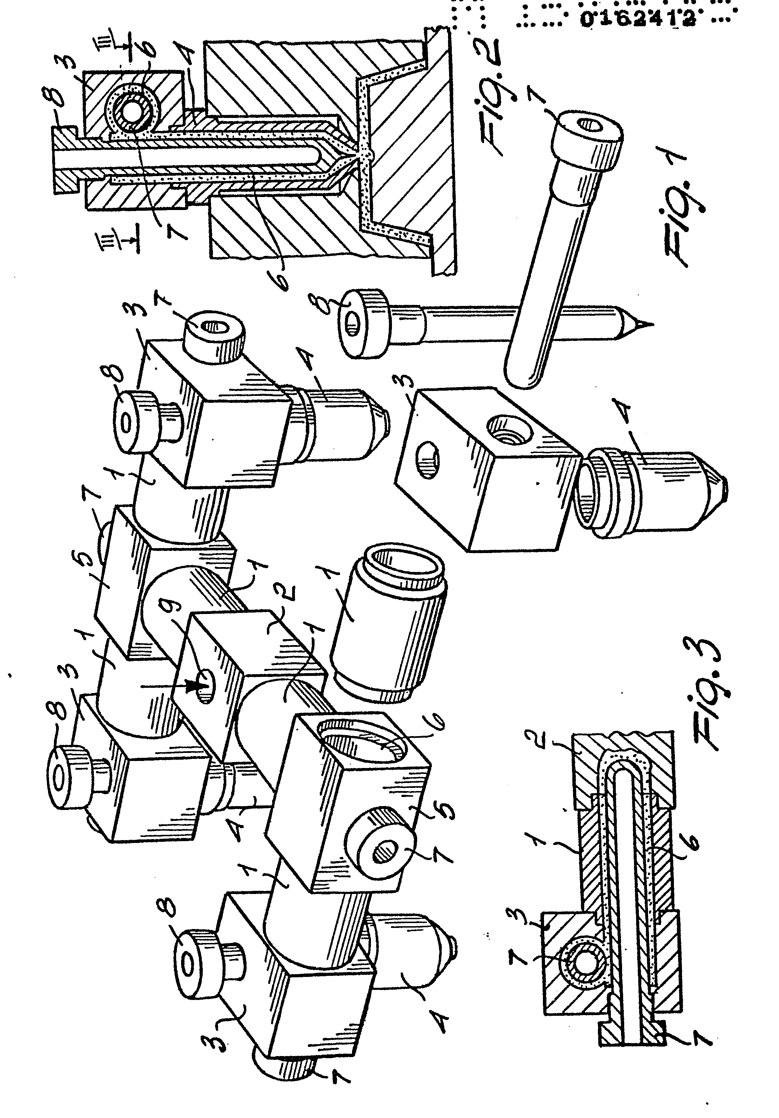

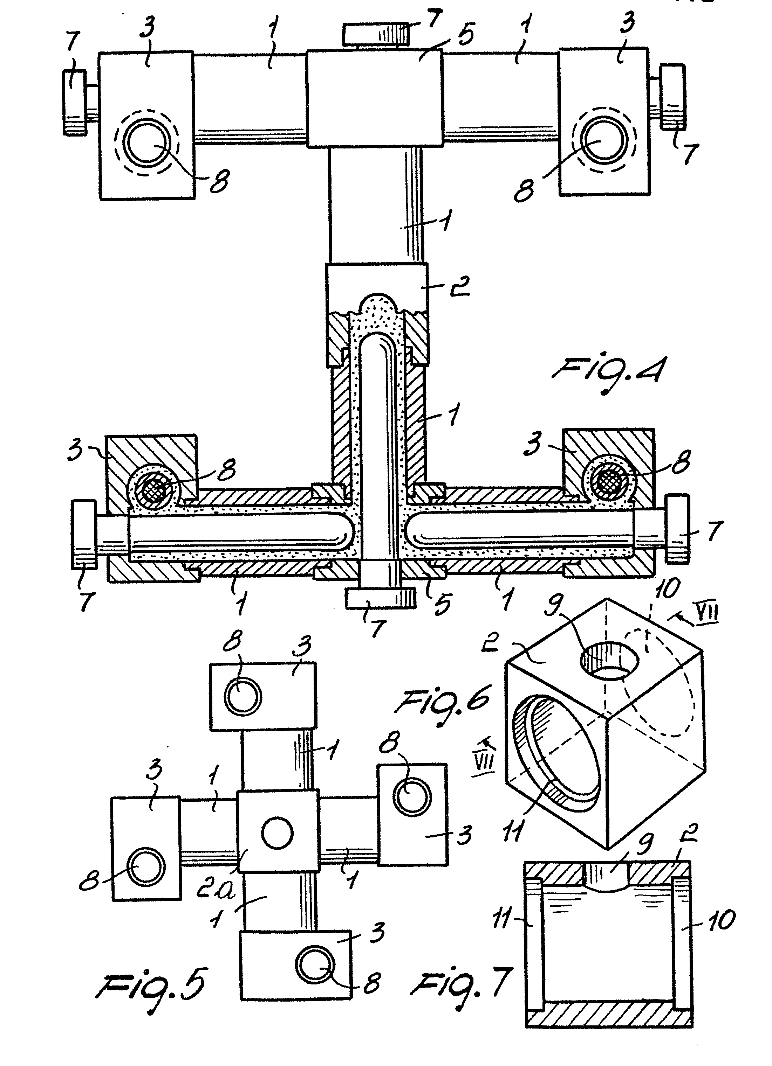

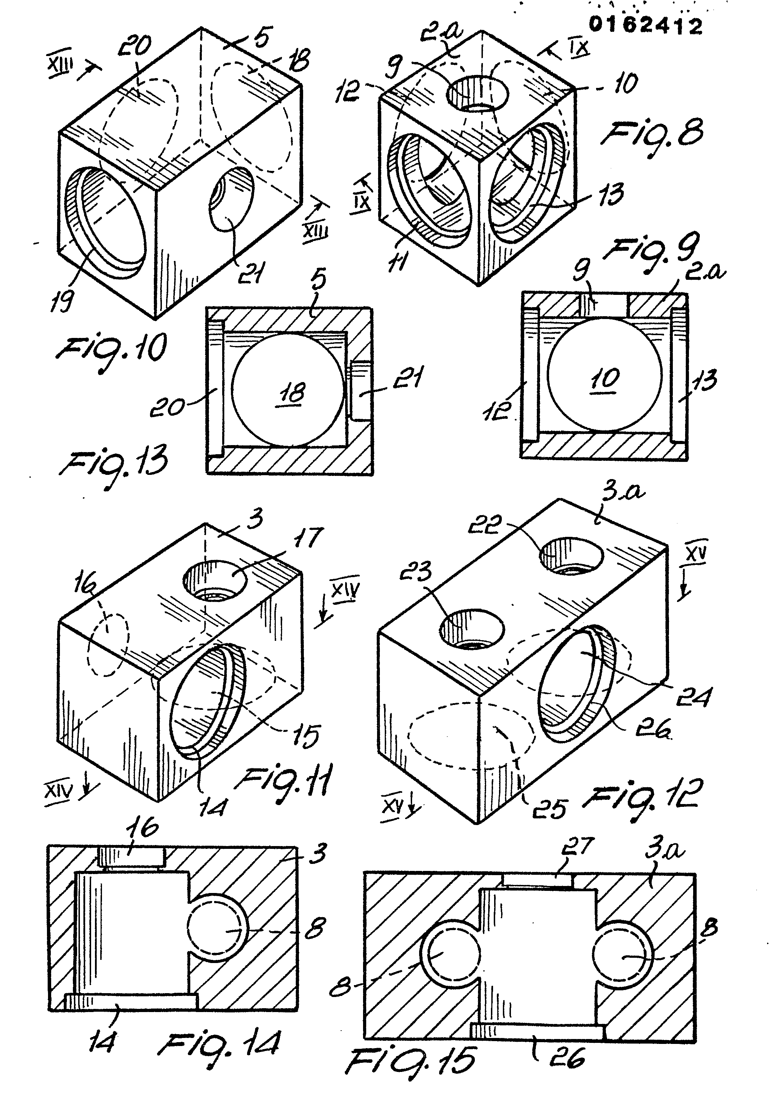

By assembling, e.g. by press fitting, modular elements of this type, one can obtain H-like shaped structures as shown in Figure 1 and Figure 4, or cross-like ones as shown in Figure 5, or a structure extending along a straight line may be provided, etc.

A structure so obtained can also accommodate the thermal expansion of the elements of which it is composed by small displacements of the spacer elements inside the modular elements whereto they are connected.

It has been found in practice that an injection block structure according to the invention can be fabricated to meet the mold requirements, in a shorter time than structures used heretofore.

The cold system heating, moreover, allows for a power consumption which is but 1/10 of the power required by the hot plate types.

A not least advantage is that the operating temperature is reached within a shorter time, i.e. about 2 minutes.

The fact that the temperature outside the block has been reduced to about 80°C, additionally to bringing about considerable power savings, reduces the risk of personal injury.

In practicing the invention any materials and dimensions may be used contingent on individual requirements and the state of the art.

CLAIMS

1. An injection block structure for feeding molten thermoplastic material into molds, comprising modular elements, internal channels formed through said modular elements and _adapted for feeding molten thermoplastic material, and in combination with said modular elements, heating means for heating said molten thermoplastic material, said heating means being housed inside said internal channels.

2. An injection block structure for feeding molten thermoplastic material into molds, according to claim 1, wherein said modular elements comprise spacer elements, connected with their ends to   at least some of said modular elements.

3. An injection block structure for feeding molten thermoplastic material into molds, according to claim 1, wherein said modular elements comprise center blocks, each formed with at least one first hole, connected to an injection machine and at least one second hole, connected to one end of said spacer elements.

4. An injection block structure for feeding molten thermoplastic material into molds, according to claim 1, wherein said modular elements comprise injection blocks, each formed with at least one first hole connected to one of said spacer elements, at least one second hole connected to one end of an injection die, and at least one third hole for the insertion of said heating means.

5. An injection block structure for feeding molten thermoplastic material into molds, according to claim 1, wherein said modular elements comprise connection blocks  each formed with at least one first hole and one second hole each connected to the ends of a spacer element and at least one third hole for the insertion of said heating means.

6. An injection block structure for feeding molten thermoplastic material into molds, according to claim 2, characterized in that said spacer elements have a substantially tubular shape.

7. An injection block structure for feeding molten thermoplastic material, according  to claim 5, wherein said center blocks, said injection blocks, and said connection blocks have a substantially parallelepipedal shape.

8. An injection block structure for feeding molten thermoplastic material into molds, according to claim 4, characterized in that said injection blocks have said second hole and said third hole coaxial with each other and laid on opposite faces.

9. An injection block structure for feeding molten thermoplastic material into molds, according to claim 1, characterized in that said heating means comprise flow streamliners and injection streamliners.

M 162412
0162412

Fig.1

Fig.2

Fig.3

0162412

Fig.4

Fig.6

Fig.5

Fig.7

0162412

Fig. 8
Fig. 9
Fig. 10
Fig. 11
Fig. 12
Fig. 13
Fig. 14
Fig. 15